# EUROPEAN PATENT SPECIFICATION

(11) **EP 2 607 767 B1**
(45) Date of publication and mention of the grant of the patent: **24.09.2014**
(21) Application number: 11425308.1
(22) Date of filing: 23.12.2011
(51) Int. Cl.: F16L 33/18, F16L 33/207, F16L 33/24, F16L 33/30

(54) **Welding end for hoses comprising a watertight device**
Schweißende für Schläuche mit einer wasserdichten Vorrichtung
Extrémité de soudure pour tuyaux comportant un dispositif d'étanchéité

(43) Date of publication of application: 26.06.2013
(73) Proprietor: Matec Group S.r.l., 20068 Peschiera Borromeo (MI) (IT)
(72) Inventor: Orfei, Mario, 20068 Peschiera Borromeo (MI) (IT)
(74) Representative: Zizzari, Massimo

(56) References cited:
- DE-A1-102007 021 846
- DE-U1- 20 301 139
- GB-A- 2 362 694
- US-A- 4 564 222

## Description

The present invention essentially concerns a watertight device, installed in welding ends for hoses, and more exactly in welding ends for flexible hoses, said device including one or more radial grooves, achieved on the outer surface of the part that is inserted in hoses, called *spigot*; the grooves are housings where respective *O-rings* are installed.

From the state of the art some previous solutions are known, in order to achieve the watertight property of flexible hoses, with reference to industrial applications where high pressure liquids should be moved on site.

A first solution, called *wet system*, includes a two-components resin, usually an epoxide resin, that in a first step is mixed, and then it is spilled in big quantity in the inner part between welding end and outer pressure ring. This resin using an activator takes approximately 6-8 hours in order to harden, so to achieve a unique body including hose, welding end and outer ring.

The main advantage of this system is to achieve a good level of watertight property, but it involves some serious drawbacks:
- the resin represents a dangerous chemical product to be handled by assigned operators;
- the resin, during the step of pushing on pressure, spills over machines and over the floor, with a consequent damage and dirty of the surrounding space;
- the resin, after the hardening process, becomes strong like a stone, and in case of leaking hose, there would be no possible recovery and the hose would be no longer usable;
- the resin, requiring approximately 6-8 hours in order to harden, would lead to long processing times, before to be tested and then delivered to the client.

A second solution, called *dry system*, includes a lip gasket, placed in the welding end, between the hose and the outer pressure ring. This system has the advantage to be fast and comfortable, but often it results to be not perfectly effective, because during the tests sometimes the welding end connected to the hose is not watertight, and there is leakage of liquids.

GB 2 362 694 A shows a welding end according to the preamble of claim 1. Therefore, the main objective of the present invention is to disclose a device achieving welding ends for hoses, and more exactly welding ends for flexible hoses, characterized by a high level of watertight property.

Another objective is that the insertion procedure of the welding ends inside the hoses results to be particularly fast, easy and safe for the assigned operators.

Another further objective is that the watertight device can be adapted, by using proper materials according to different applications of hoses, and therefore can achieve the watertight property, even in cases of being in touch with particularly aggressive chemical products.

Therefore, it is specific subject of the present invention to provide a welding end for hoses according to claim 1.

The present invention will now be described for illustrative but not limitative purposes, according to its preferred embodiments, with particular reference to figures of the enclosed drawings, wherein:
figure 1 is a front perspective view of a welding end, according to the present invention, having two *O-rings*;
figure 2 is a front perspective view of the same welding end of figure 1, where two radial grooves are visible, in said grooves the respective *O-rings* are inserted;
figure 3 is a top view of the same welding end of figure 1;
figure 4 is a front view of the same welding end of figure 1;
figure 5 is a lateral view of the same welding end of figure 1;
figure 6 is a front perspective view of the same welding end of figure 1, in a first step of insertion and connection to a composite hose having a double metallic spiral, inside and outside;
figure 7 is a front perspective view of the same welding end of figure 1, in a second step of completed insertion and connection to a composite hose having a double metallic spiral, inside and outside;
figure 8 is a front perspective view of a welding end, according to an embodiment with outer pressure ring, in a first step of insertion and connection to a composite hose having a double metallic spiral, inside and outside;
figure 9 is a front perspective view of a welding end, according to an embodiment with outer pressure ring, like in figure 8, in a second step of completed insertion and connection to a composite hose having a double metallic spiral, inside and outside;
figure 10 is a lateral view of the same welding end of figure 8, in a first step of insertion and connection to a composite hose having a double metallic spiral, inside and outside;
figure 11 is a lateral view of the same welding end of figure 9, in a second step of completed insertion and connection to a composite hose having a double metallic spiral, inside and outside.

It is here underlined that only few of the many conceivable embodiments of the present invention are described, which are just some specific non-limiting examples, having the possibility to describe many other embodiments based on the disclosed technical solutions of the present invention.

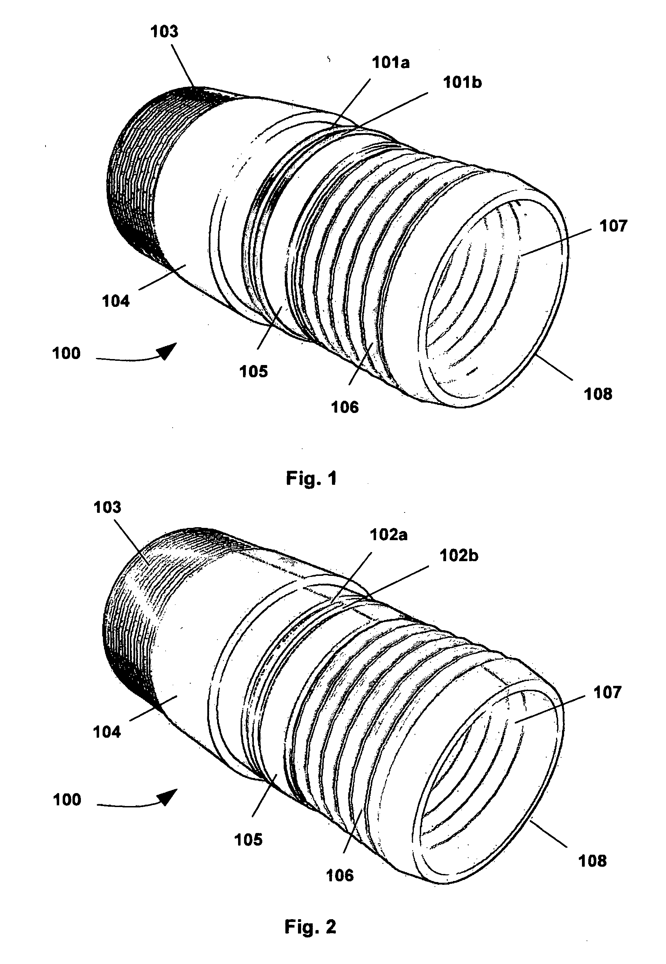

Figure 1 shows a welding end 100 for hoses, comprising a watertight device. This welding end 100 has a basic structure, typically with a cylindrical shape, with a front end 108 being properly tapered, a front part 106 being threaded in order to be screwed in a flexible hose, and a rear end 103 also properly tapered and threaded in order to be connected to another structure, in example a rigid structure, or to another hose.
The flexible hose where the front end 108 of the welding end 100 is inserted is a composite hose, reinforced with a double metallic spiral, inside and outside, like in example a Compotec® hose.

Figure 2 shows how the smooth part 105 of the welding end, that is inserted in the hose, comprises two grooves 102a, 102b, on the radial outline.
These grooves 102a, 102b, are housings where two respective *O-rings* 101a, 101b are inserted and, as shown in figure 1, the *O-rings* 101a, 101b maintain a prominent upper side in respect to the radial outline of *spigot* 105.

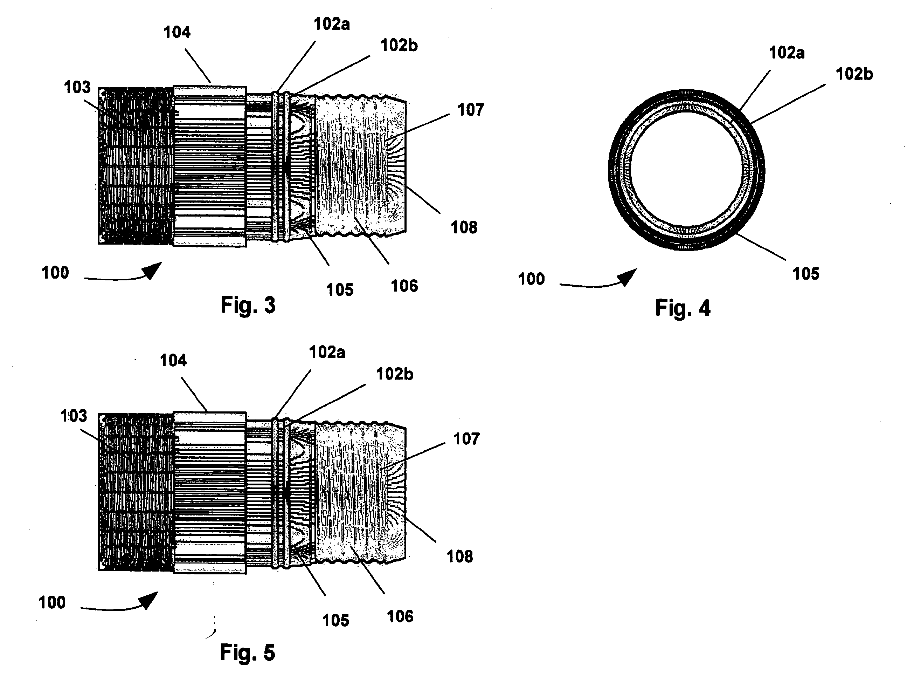

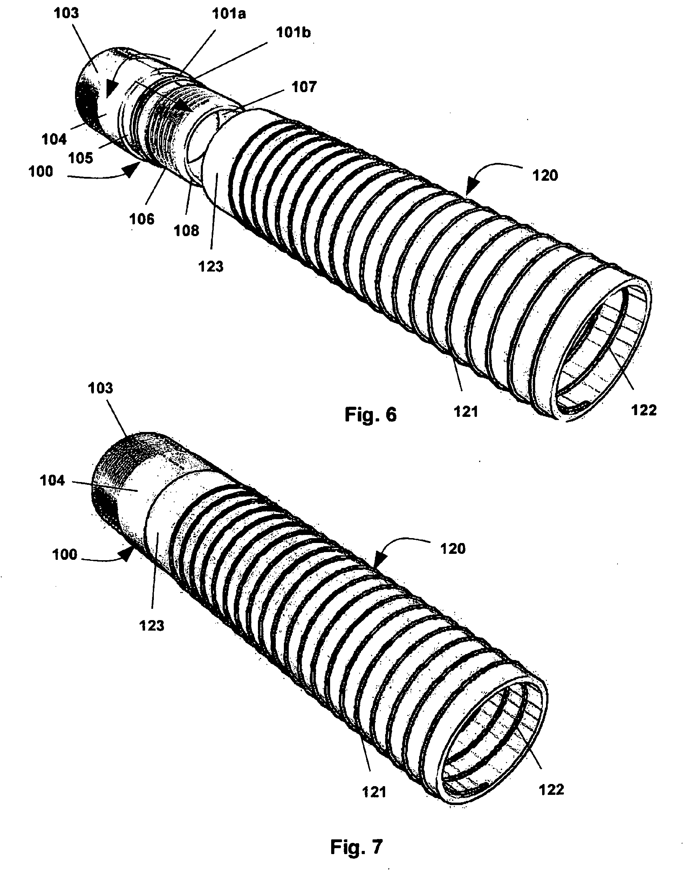

Figures 3, 4 and 5, show the exact geometrical shape of the welding end 100, according to respective top, front and lateral views.
The insertion of *spigot* 105 in the hose 120 is provided, as illustrated in figures 6 and 7, by pushing the welding end 100 along the longitudinal arrow, and rotating the same welding end 100 along the transversal arrow.
According to the above insertion, the two *O-rings* 101a, 101b, change under pressure the outline of their prominent upper side so that they grip homogeneously to the inner wall of the same hose 120, therefore no cracks and/or gaps are left behind, by which a liquid could pass through, leading to a watertight property of the whole welding end 100 that is placed in connection to the hose 120.

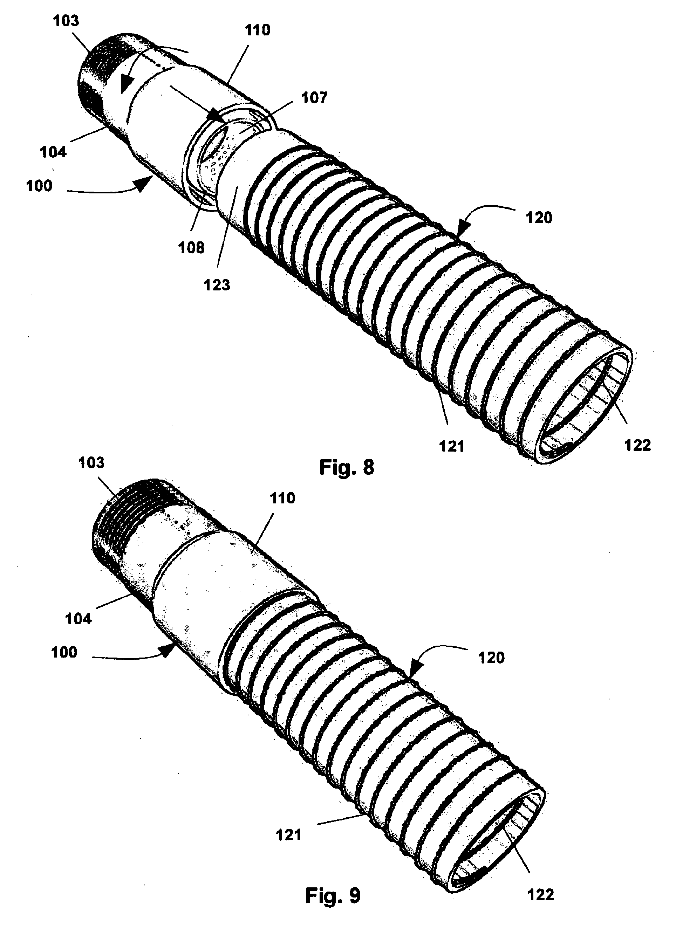

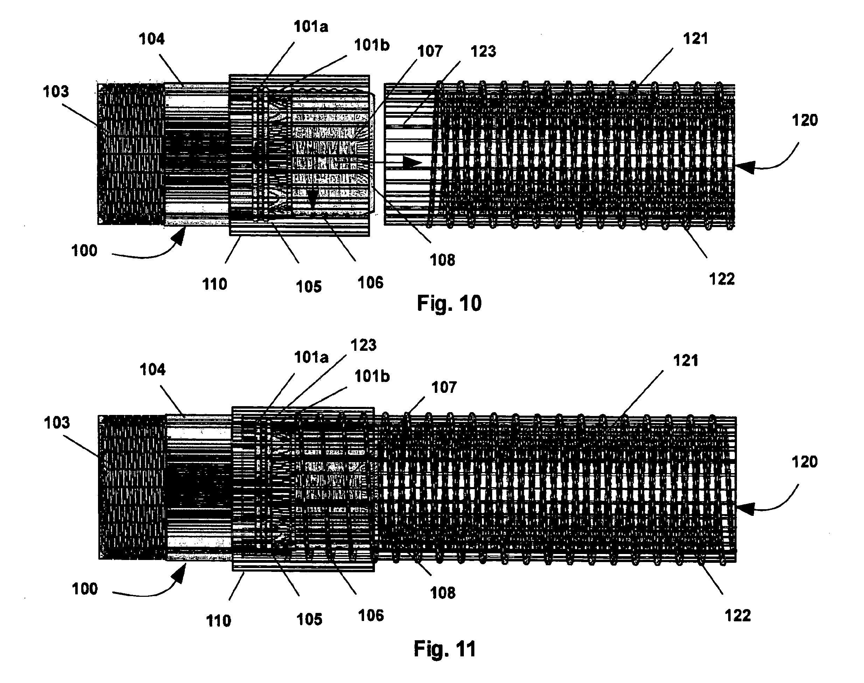

An alternative embodiment of the present invention, as illustrated in figures 8 and 9, further comprises an outer pressure ring 110, surrounding the outer part of said *spigot* 105, and defining an inner space between ring 110 and *spigot* 105, where the end 123 of a hose 120 is inserted, said end 123 having been previously made free, by a cut, of an ending part of inner 122 and outer spiral 121.
Again, the insertion of *spigot* 105 in the hose 120 is provided by pushing the welding end 100 along the longitudinal arrow, and rotating the same welding end 100 along the transversal arrow.
The above insertion is illustrated more in detail in figures 10 and 11, where it is represented the initial and final position of the welding end 100 and the hose 120. When the operation is completed, the ring 110 surrounds the outer part of said hose 120, and then it is submitted to a process of radial compression along the inner direction, so that the components are definitely assembled in a stable a watertight position.
Therefore, the part between welding end 100 and hose 120 results to be watertight: inside, the *O-rings* 101a, 101b, gripping homogeneously to the inner wall of the same hose 120 do not leave any space or crack where a liquid could pass through; outside, the ring 110 bonding homogeneously to the outer wall of the same hose 120, and keeping the outer spiral 121 under pressure, does not leave any space or crack where a liquid could pass through.

An alternative embodiment of the present invention comprises, instead of said *O-rings* 101a, 101b, a unique *O-ring,* having a rectangular cross-section with a larger bottom part, inserted in a unique radial groove, again placed on the radial outline of the part of welding end 100, called *spigot* 105.
The working principle is similar to the one described previously, that is: when the above said *spigot* 105 is inserted in said hose 120, said *O-ring* with rectangular cross-section changes, under pressure, the outline of its prominent upper side. In such a way it grips homogeneously to the inner wall of the same hose 120, therefore no cracks and/or gaps are left behind, by which a liquid could pass through, leading to a watertight property of the whole welding end 100 that is placed in connection to said hose 120.

Another further embodiment of the present invention includes, in addition to the components previously described, a lip gasket placed between said pressure ring 110 and the outer surface of hose 120, so that a synergic effect is produced with the above said elements, and the watertight property of the welding end 100 is even more effective.

Therefore, the above examples show that the present invention achieves all the proposed objectives. In particular, it discloses a device achieving welding ends for hoses, and more exactly welding ends for flexible hoses, characterized by a high level of watertight property.

In addition, according to the invention, the insertion procedure of the welding ends inside the hoses results to be particularly fast, easy and safe for the assigned operators.

Furthermore, the watertight device can be adapted, by using proper materials in respect to different applications of hoses, and therefore can achieve the watertight property, even in cases of being in touch with particularly aggressive chemical products.

The present invention has been described for illustrative but not limitative purposes, according to its preferred embodiments, but it is clear that modifications and/or changes can be introduced by those skilled in the art without departing from the relevant scope, as defined in the enclosed claims.

## Claims

1. A welding end (100) for hoses, comprising a watertight device, said device being composed of:
- a basic structure comprising one or more grooves (102a), (102b), placed on the radial outline of the part of welding end (100), called *spigot* (105), that is inserted in a hose (120);
**characterized by** said spigot having a front end (108) being properly tapered and a front part (106) being threaded in order to be screwed on a flexible hose, and specifically on a composite hose (120) reinforced with a double metallic spiral, inside and outside;
- one or more *O-rings* (101a), (101b), made of an elastic material, that is natural or synthetic, which are respectively inserted and housed in said one or more grooves (102a), (102b), maintaining therefore a prominent upper side in respect to the radial outline of said *spigot* (105),
so that when the above said *spigot* (105) is inserted in said hose (120), said one or more *O-rings* (101a), (101b), can change, under pressure, the outline of their prominent upper side and can grip homogeneously to the inner wall of the same hose (120), therefore no cracks and/or gaps are left behind, by which a liquid could pass through, leading to a watertight property of the whole welding end (100) that is placed in connection to said hose (120).

2. A welding end (100) for hoses, comprising a watertight device, according to previous claim, **characterized in that** further comprising:
- an outer pressure ring (110), surrounding the outer part of said *spigot* (105), and defining an inner space between ring (110) and *spigot* (105), where the end (123) of a hose (120) is inserted, said end (123) having been previously made free, by a cut, of an ending part of inner (122) and outer spiral (121),
so that the part between welding end (100) and hose (120) is watertight: inside, the *O-rings* (101a), (101b), gripping homogeneously to the inner wall of the same hose (120) do not leave any space or crack where a liquid could pass through; outside, the ring (110) bonding homogeneously to the outer wall of the same hose (120), and keeping the outer spiral (121) under pressure, does not leave any space or crack where a liquid could pass through.

3. A welding end (100) for hoses, comprising a watertight device, according to previous claim 2, **characterized in that**:
- the ring (110), surrounding the outer part of said hose (120), is submitted to a process of radial compression along the inner direction,
so that the components are definitely assembled in a stable a watertight position.

4. A welding end (100) for hoses, comprising a watertight device, according to one or more of previous claims, **characterized in that** comprising:
- instead of said *O-rings* (101a), (101b), a unique *O-ring,* having a rectangular cross-section with a larger bottom part, inserted in a unique radial groove, again placed on the radial outline of the part of welding end (100), called *spigot* (105);
so that when the above said *spigot* (105) is inserted in said hose (120), said *O-ring* with rectangular cross-section can change, under pressure, the outline of its prominent upper side, and can grip homogeneously to the inner wall of the same hose (120), therefore no cracks and/or gaps are left behind, by which a liquid could pass through, leading to a watertight property of the whole welding end (100) that is placed in connection to said hose (120).

5. A welding end (100) for hoses, comprising a watertight device, according to previous claim 2, **characterized in that** further comprising:
- a lip gasket, placed between said pressure ring (110) and the outer surface of hose (120),
so that a synergic effect is produced with the above said elements, and the watertight property of the welding end (100) is even more effective.

## Patentansprüche

1. Ein Verbindungselement (100) für Schläuche, das eine Vorrichtung mit Hydraulikdichtung umfasst. Diese Vorrichtung besteht aus:
- einer Basisstruktur, die eine oder mehrere Nuten (102a), (102b) umfasst, die auf dem Radialprofil des Verbindungsteils (100), das in einen Schlauch (120), genannt Schaft (105), eingeführt wird, geschaffen werden,
diese zeichnet sich dadurch aus, dass besagter Schaft (105) ein entsprechend verjüngtes frontales Ende (106) und einen frontalen Teil (106) mit Gewinde hat, so dass es auf einen Schlauch, genauer auf ein Verbundrohr (120), aufgeschraubt werden kann, das innen und außen mit einer Doppelspirale verstärkt ist;
- einem oder mehreren Dichtungsringen (101a), (101b), genannt *O-Ringe* (101a), (101b), aus elastischem, natürlichem oder synthetischem Material, die eingeführt wurden und als Sitz die entsprechenden eine oder mehrere Nuten (102a), (102b) haben und so den oberen, im Vergleich zum Radialprofil des Schaftes (105), hervorstehenden Teil halten;
so dass besagte eine oder mehrere *O-Ring-* Dichtungen (101a), (101b) durch Druck das Profil des oberen hervorstehenden Teils in Entsprechung der Einführung des Schaftes (105) in den Schlauch ändern und gleichermaßen auf den Innenwänden desselben Schlauchs (120) anhaften können, so dass keine Ritzen und/oder Spalten gelassen werden, durch die Flüssigkeit treten kann. So wird die hydraulische Dichtung desselben Verbindungselements (100) im Ganzen und in seiner Verbindungsposition zum Schlauch (120) garantiert.

2. Ein Verbindungselement (100) für Schläuche, das eine Vorrichtung mit Hydraulikdichtung umfasst, gemäß dem vorherigen Anspruch. Es zeichnet sich durch die Tatsache aus, dass es zusätzlich Folgendes enthält:
- einen äußeren Dichtungsring (110), der den äußeren Teils des obengenannten Schaftes (105) umhüllt und der einen Zwischenraum zwischen dem Ring (110) und dem Schaft (105) lässt, in den das Ende (123) des Schlauchs (120), welches entsprechend und im Voraus durch einen Schnitt eines Abschnitts der internen (122) und externen (121) Spirale freigesetzt wird, eingeführt wird,
so dass die hydraulische Dichtung zwischen Anschluss (100) und Schlauch (120) gewährleistet wird:
intern, über die O-Ring-Dichtungen (101a), (101b), die gleichmäßig auf den Innenwänden desselben Schlauchs (120) haftend, keine Ritzen und/oder Spalten durch die Flüssigkeit treten kann, lassen; extern, über den Ring (110), der gleichmäßig an den Außenwänden desselben Schlauchs (120) haftet und auch die externe Spirale (121) komprimiert und daher keine Ritzen und/oder Spalten lässt, durch die Flüssigkeit treten kann.

3. Ein Verbindungselement (100) für Schläuche, das eine Vorrichtung mit Hydraulikdichtung umfasst, gemäß dem vorherigen Anspruch 2. Es zeichnet sich durch die Tatsache aus, dass:
- der Ring (110), der extern die Enden des Schlauchs (120) umhüllt, einem radialen Kompressionsvorgang nach Innen unterzogen wird,
so dass die Komponenten endgültig in einer stabilen Position des hydraulische Dichtung zusammengesetzt werden.

4. Ein Verbindungselement (100) für Schläuche, das eine Vorrichtung mit Hydraulikdichtung umfasst, gemäß einem oder mehreren der vorherigen Ansprüche. Es zeichnet sich durch die Tatsache aus, dass es folgendes umfasst:
- anstelle der zwei vorherigen *O-Ring*-Dichtungen (101a), (101b), einen einzigen Dichtungsring mit rechteckigem Querschnitt mit einer breiten Basis, die in einen einzigen Radialschlitz eingeführt wird, der stets aus dem Radialprofil des Verbindungsteils (100), besagter Schaft (105) geschaffen wird,
so dass besagte Dichtung mit rechteckigem Querschnitt durch Druck das Profil seines oberen hervorstehenden Teils in Entsprechung der Einführung des Schaftes (105) in den Schlauch (120) ändern und gleichermaßen auf die Innenwände desselben Schlauchs (120) anhaften kann, so dass sie keine Ritzen und/oder Spalten gelassen werden, durch die Flüssigkeit treten kann und so die hydraulische Dichtung desselben Verbindungselement (100) im Ganzen und in seiner Verbindungsposition zum Schlauch (120) garantiert wird.

5. Ein Verbindungselement (100) für Schläuche, das eine Vorrichtung mit Hydraulikdichtung umfasst, gemäß dem vorherigen Anspruch 2. Es zeichnet sich durch die Tatsache aus, dass es zusätzlich folgendes enthält:
- eine weitere Dichtung, von der Art Dichtlippe, die zwischen dem obengenannten Dichtungsring (110) und der externen Oberfläche des Schlauches (120) positioniert ist,
so dass mit den obengenannten Elementen ein synergetischer Effekt erzeugt wird und man somit eine noch effizientere hydraulische Dichtung erhält.

## Revendications

1. Élément de raccordement (100) pour tubes, comprenant un dispositif à étanchéité hydraulique, ledit dispositif étant constitué de :
- une structure de base comprenant une ou plusieurs rainures (102a), (1 02b), obtenues sur le profil radial de la partie de raccordement (100) qui s'insère dans un tube (120), appelée cône (105),
**caractérisée par le fait que** ledit cône (105) présente une extrémité avant (106) convenablement effilée et une partie avant (106) filetée de manière à pouvoir être vissée sur un tube flexible, et plus précisément sur un tube composite (120) renforcé par une double spirale, à l'intérieur et à l'extérieur ;
- un ou plusieurs joints (101a), (101b), appelés *joints toriques* (101a), (101b), fabriqués en matériau élastique, naturel ou synthétique, qui sont insérés et sont situés dans la ou les rainure(s) respective(s) (102a), (102b), maintenant ainsi la partie supérieure en saillie par rapport au profil radial du cône (105) ;
de sorte que ledit ou lesdits *joints toriques* (101a), (101b) puissent modifier par pression le profil de leur partie supérieure en saillie, au niveau de l'insertion du cône (105) à l'intérieur d'un tube (120) et adhérer uniformément aux parois internes dudit tube (120), de manière à ne pas laisser de fissures et/ou d'interstices dans lesquels le liquide peut passer, en garantissant ainsi l'étanchéité hydraulique dudit élément de raccordement (100) dans son ensemble, et dans sa position de connexion au tube (120).

2. Élément de raccordement (100) pour tubes, comprenant un dispositif à étanchéité hydraulique, selon la revendication précédente, **caractérisé par le fait qu'**il comprend également :
- une bague d'étanchéité externe (110) qui entoure la partie externe dudit cône (105) et qui laisse un espace entre la bague (110) et le cône (105), dans lequel s'insère l'extrémité (123) du tube (120), qui a été convenablement et préalablement libérée, en la coupant, d'un tronçon de spirale interne (122) et externe (121),
de manière à ce que l'étanchéité hydraulique entre le raccord (100) et le tube (120) soit assurée : à l'intérieur, par l'intermédiaire des *joints toriques* (101a), (101b) qui, adhérant uniformément aux parois internes dudit tube (120), ne laissent pas de fissures et/ou d'interstices dans lesquels le liquide peut passer ; à l'extérieur, par l'intermédiaire de la bague (110) qui adhère uniformément aux parois externes dudit tube (120) et comprime également la spirale externe (121), ne laissant ainsi aucune fissure et/ou interstice dans lesquels le liquide peut passer.

3. Élément de raccordement (100) pour tubes, comprenant un dispositif à étanchéité hydraulique, selon la précédente revendication 2, **caractérisé par le fait que** :
- la bague (110) qui entoure extérieurement l'extrémité du tube (120) est soumise à une opération de compression radiale vers l'intérieur,
de manière à assembler les composants de façon permanente dans une position stable et étanche au niveau hydraulique.

4. Élément de raccordement (100) pour tubes, comprenant un dispositif à étanchéité hydraulique, selon une ou plusieurs des revendications précédentes, **caractérisé par le fait qu'**il comprend :
- à la place des deux précédents *joints toriques* (101a), (101b), un seul joint torique à section rectangulaire avec une base large, inséré à l'intérieur d'une seule rainure radiale, toujours obtenue sur le profil radial de la partie du raccordement (100), appelée cône (105),
de sorte que ledit joint à section rectangulaire puisse modifier par pression le profil de sa partie supérieure en saillie, au niveau de l'insertion du cône (105) à l'intérieur d'un tube (120) et adhérer uniformément aux parois internes dudit tube (120), de manière à ne pas laisser de fissures et/ou d'interstices dans lesquels le liquide peut passer, en garantissant ainsi l'étanchéité hydraulique dudit élément de raccordement (100) dans son ensemble, et dans sa position de connexion au tube (120).

5. Élément de raccordement (100) pour tubes, comprenant un dispositif à étanchéité hydraulique, selon la précédente revendication 2, **caractérisé par le fait qu'**il comprend également :
- un autre joint, à lèvre, placé entre ladite bague d'étanchéité (110) et la surface externe du tube (120),
de manière à produire un effet de synergie avec lesdits éléments et obtenir ainsi une étanchéité hydraulique encore plus efficace.
